# EUROPEAN PATENT SPECIFICATION

(11) **EP 2 168 996 B1**
(45) Date of publication and mention of the grant of the patent: **12.12.2012**
(21) Application number: 09171303.2
(22) Date of filing: 25.09.2009
(51) Int. Cl.: C08J 3/07, C08L 21/02, C08J 3/215, C08K 3/34, C08L 21/00, C08J 3/205, B60C 1/00

(54) **Process for production of clay nanocomposite**
Verfahren zur Herstellung von Nanokompositen aus Ton
Procédé de production de nanocomposites à base d'argile

(30) Priority: 26.09.2008 US 238892
(43) Date of publication of application: 31.03.2010
(73) Proprietor: The Goodyear Tire & Rubber Company, Akron, OH 44316-0001 (US)
(72) Inventor: Unseld, Klaus, L-1611, Luxembourg (LU); Van Eck, Dirk, D-63110, Rodgau (DE); Fuchs, Hans-Bernd, D-54329, Konz (DE); Zimmer, Rene Jean, L-1232, Howald (LU); Boes, Claude Ernest Felix, L-9147, Erpeldange (LU); Görl, Roman, D-97299, Zell am Main (DE)
(74) Representative: Kutsch, Bernd

(56) References cited:
- EP-A2- 1 935 927
- FR-A1- 2 281 947
- GB-A- 250 279
- US-A1- 2004 054 059
- US-A1- 2005 065 266
- DATABASE WPI Week 200868 Thomson Scientific, London, GB; AN 2008-L61198 XP000002657732, & JP 2008 189885 A (SUMITOMO RUBBER IND LTD) 21 August 2008 (2008-08-21)

## Description

### Background of the Invention

The addition of fillers to polymers is a common industrial practice. Its purpose is generally twofold; to reduce the overall cost of the composite while concurrently bringing about improvement in, for example, mechanical properties such as wear, hardness, tensile modulus, tear etc. It is also known that by using filler particles of very small dimensions (<100 nm), polymer composite properties may be improved with a much lower concentration of filler, typically 2 to 10 parts by weight per 100 parts by weight of rubber compared to 30 to 100 parts by weight per 100 parts by weight of rubber with normally micron sized filler particles. Common inorganic nanometer or "nano-scale" fillers possess extremely high surface area with high surface energy. For this reason, it is important that this surface energy be overcome or dissipated in some manner to allow efficient compatibilization and dispersion of the nano-filler into the polymeric substrate to avoid filler aggregation during processing and finishing of the final product.
Formation of organic-inorganic nanocomposites based on clays or layered silicates such as montmorillonite is known. Generally, these clays are normally modified by alkyl ammonium ions or amines through an ion-exchange process. The large organic ions displace the smaller inorganic ions (e.g. sodium ion) that reside between the negatively charged silicate platelets thus expanding the interplate distances while concurrently making the modified clay more hydrophobic. The end result is a modified clay that is more readily dispersible in a polymeric substrate. In some instances, the new nanocomposite has an intercalated structure wherein the clay is well dispersed with no large aggregates but still largely retains its layered (but expanded) domain morphology. The expanded layered structure will allow some of the polymeric substrate to interpenetrate between the stacked platelets which, in turn, often results in physical property improvements. While the intercalated polymer-clay domain structure is an improvement, it does not reach the ultimate state of dispersion commonly referred to as exfoliation. When an exfoliated state is achieved as evidenced by a complete lack of an X-ray diffraction pattern, the clay is delaminated and the layered structure of the clay is completely disrupted. Individual platelets in this state now have little affinity for each other relative to the polymeric substrate. The attainment of the exfoliated state will provide the most improvement in properties with the lowest level of filler possible.

### Summary of the Invention

The present invention is directed to a process according to claim 1 and to a tire according to claim 6.

Dependent claims refer to preferred embodiments of the invention.

Fully or about fully exfoliated clay platelets in a rubber matrix lead to an improvement in the ultimate rubber properties, such as tensile strength and elongation at break, at low filler loadings but this is often accompanied by high damping factors due to the high filler surface area. By contrast, a balance between ultimate rubber properties and viscoelastic rubber properties, such as lower tan delta and increased dynamic modulus, is obtained with an intercalated rubber-clay material produced by the method of the present invention.

### Detailed Description of the Invention

There is disclosed a process of preparing a nanocomposite comprising an elastomer and at least partially exfoliated, intercalated water-swellable clay, the process comprising the steps of
(A) forming a first blend of water-swelled clay and anionic polymer particle emulsion by blending:
   (1) an aqueous mixture comprising water and a multilayered water-swellable clay, exclusive or substantially exclusive of an intercalant for said clay, wherein said water-swellable clay comprises a plurality of stacked platelets with water-expanded galleries between said platelets, wherein said galleries contain naturally occurring cationic ion exchangeable ions therein; and
   (2) an elastomer latex comprising an elastomer selected from the group consisting of natural rubber, synthetic polyisoprene, polybutadiene, and styrene-butadiene rubber;
(B) blending with said first blend an aqueous mixture comprising water and from 1 to 5 percent by weight of a polar polymer selected from the group consisting of hydroxyethylcellulose, carboxymethylcellulose, carboxymethylcellulose sodium salt,
starch, modified starch, gelatin, polyvinylalcohol, polyacrylic acid, polyacrylic acid salts, derivatives of polyacrylic acid, and carboxylated rubbers.

In a first step of the process, a colloidal aqueous mixture of clay is prepared by mixing clay with water.

Water-swellable clays considered for use in this invention which are clays composed of a plurality of stacked platelets (e.g. very thin silicate based platelets) which contain cationically exchangeable ions in the galleries between such platelets. Representative of such clays are water swellable smectite clays, vermiculite based clays and mica based clays. Included are both naturally occurring clays and synthetic clays. Also included in suitable clays include sepiolite and attapulgite clays. Preferably such water-swellable clays are smectite clays. Representative of smectite clays are, for example, montmorillonite, hectorite, nontrite, beidellite, volkonskoite, saponite, sauconite, sobockite, sterensite, and sinfordite clays of which montmorillonite and hectorite clays are preferred. For various exemplary smectite clays, see for example US-A- 5,552,469. Such cationically exchangeable ions contained in such galleries typically comprise at least one of sodium ions and potassium ions, which may also include calcium ions and/or magnesium ions, although it is understood that additional cationically exchangeable ions may be present. Typically, montmorillonite clay is preferred which contains sodium ions in such galleries, although it is understood that a minor amount of additional cationically exchangeable ions may be contained in such galleries such as for example, calcium ions. Suitable clays include EXM 757 from Süd-Chemie.

In one aspect, a water swellable clay, such as for example a smectite clay such as, for example, a montmorillonite clay, for use in this invention, might be described, for example, as a naturally occurring clay of a structure which is composed of a plurality of stacked, thin and relatively flat, layers, where such individual layers may be of a structure viewed as being composed of very thin octahedral shaped alumina layer sandwiched between two very thin tetrahedrally shaped silica layers to form an aluminosilicate structure. Generally, for such aluminosilicate structure in the naturally occurring montmorillonite clay, some of the aluminum cations (Al⁺³) are viewed as having been replaced by magnesium cations (Mg⁺²) which results in a net negative charge to the platelet layers of the clay structure. Such negative charge is viewed as being balanced in the naturally occurring clay with hydrated sodium, lithium, magnesium, calcium and/or potassium cations, usually primarily sodium ions, within the spacing (sometimes referred to as "galleries") between the aforesaid aluminosilicate layers, or platelets.

In practice, the degree of exfoliation of the clay platelets can be qualitatively evaluated, for example, by wide angle X-ray diffraction (WAXD) as evidenced by a substantial absence of an X-ray peak which is a well known method of such evaluation. Such evaluation relies upon observing WAXD peak intensities and changes (increase) in the basal plane spacing between platelets.

To prepare the colloidal aqueous clay mixture, water and clay are mixed under low shear conditions to allow swelling of the clay. In one embodiment, the water and clay are mixed for a period ranging from 10 minutes to 2 hours.

Preferably, the water is deioinized.

Preferably, the colloidal aqueous clay mixture comprises from about 1 to about 5 percent by weight of clay in water. In one embodiment, the colloidal aqueous clay mixture comprises from about 2 to 4 percent by weight of clay in water.

The colloidal aqueous clay mixture is combined with an elastomer latex. Suitable elastomer latexes include latexes of elastomers selected from the group consisting of natural rubber, synthetic polyisoprene, polybutadiene, and styrene-butadiene rubber. Preferably, the latex comprises from 15 to 30 parts by weight of elastomer. In one embodiment, the latex comprises from 20 to 22 parts by weight of elastomer.

The elastomer latex is slowly added to the aqueous water-clay mixture; addition of the more concentrated latex to the less concentrated aqueous water-clay mixture allows for better distribution of the clay with the elastomer. The rate of addition of the latex to the aqueous water-clay mixture is relatively slow to avoid shear induced coagulation of the latex. Additionally, the mixing of the latex and aqueous water-clay mixture is done gently, with low shear to further avoid shear induced coagulation of the latex.

Following addition of the elastomer latex to the aqueous water-clay mixture, the resultant combination is mixed under low shear conditions for a period sufficient to all complete mixing of the elastomer and clay. In one embodiment, the mixing time ranges from 10 minutes to 2 hours.

Preferably, the amount of clay combined with the elastomer latex ranges from 1 to 100 parts by weight of clay per 100 parts by weight of elastomer solids (phr). In one embodiment, the amount of clay combined with the elastomer latex ranges from 5 to 30 parts by weight of clay per 100 parts by weight of elastomer solids (phr).

Following combination and mixing of the elastomer latex and the aqueous water-clay mixture, an aqueous solution of a polar polymer is slowly added to the combined elastomer latex/ aqueous water-clay mixture. Suitable polar polymers include hydroxyethylcellulose, carboxymethylcellulose, carboxymethylcellulose sodium salt, starch, modified starch, gelatin, polyvinylalcohol, polyacrylic acid, polyacrylic acid salts, derivatives of polyacrylic acid, carboxylated rubbers, and the like.

Preferably, the polar polymer is hydroxyethylcellulose. Preferably, the hydroxyethylcellulose has a molecular weight ranging from 100,000 to 1.5 × 10⁶.

In one embodiment, the concentration of polar polymer in the aqueous solution of polar polymer ranges from 1 to 5 percent by weight. In another embodiment, the concentration of polar polymer in the aqueous solution of polar polymer ranges from 2 to 4 percent by weight.

The aqueous solution of polar polymer is added to the combined elastomer latex and aqueous water clay mixture. The aqueous solution of polar polymer is added slowly and with low shear mixing to avoid shear induced coagulation of the elastomer. Preferably, the weight ratio of polar polymer to clay ranges from 0.05:1 to 0.5:1. In another embodiment, the weight ratio of polar polymer to clay ranges from 0.1:1 to 0.3:1.

Following addition of the aqueous solution of polar polymer to to the combined elastomer latex and aqueous water clay mixture, the resultant combination is mixed under low shear conditions for a period sufficient to all complete mixing of the polar polymer, elastomer, and clay. In one embodiment, the mixing time ranges from 10 minutes to 2 hours.

Following mixing of the aqueous solution of polar polymer to the combined elastomer latex and aqueous water clay mixture, the resultant combination is dried under low shear conditions to remove the water to obtain the elastomer/polar polymer/clay nanocomposite. Suitable drying methods include those that involve little agitation or shear of the material being dried, such as are known in the art. In one embodiment, the nanocomposite may be obtained after batch or continuous tray drying, either at atmospheric or vacuum conditions. In another embodiment, the nanocomposite may be obtained after double drum drying. In one embodiment, the nanocomposite may be dried at a temperature ranging from 20°C to 70°C.

Upon drying, the elastomer/polar polymer/clay nanocomposite has a low moisture content. Preferably, the moisture content of the nanocomposite is less that 3 percent by weight of water. In one embodiment, the moisture content of the nanocomposite is less than 1 percent by weight of water.

The nanocomposite is generally used in a rubber composition along with various other compounding additives.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). Preferably, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 or 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-A-6,242,534; US-A- 6,207,757; US-A- 6,133,364; US-A- 6,372,857; US-A-5,395,891; or US-A- 6,127,488, and plasticized starch composite filler including but not limited to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z - Alk - Sₙ - Alk - Z I

in which Z is selected from the group consisting of 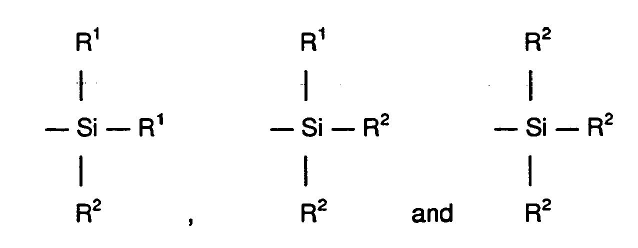 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 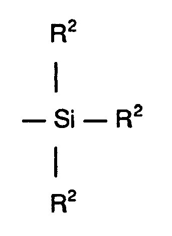 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may be a radial or bias.

Vulcanization of the pneumatic tire of the present invention is generally carried out at conventional temperatures ranging from about 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, the preparation of elastomer/clay nanocomposite is illustrated. A colloidal aqueous mixture of clay was prepared by mixing 1 gram of sodium montmorillonite (EXM 757 from Süd-Chemie) per 30 ml of deionized water. A styrene-butadiene rubber (SBR 1721) latex containing 21.5 percent solids was then added to the water-clay mixture at room temperature with gentle mixing for 2 hours. Sufficient quantity of the latex was added to the water-clay mixture to obtain the desired clay content in the resultant clay/elastomer composite. A 3 percent by weight solution of hydroxyethylcellulose (HEC, molecular weight 1.3 × 10⁶) in water was then added to the latex-water-clay mixture with gentle mixing. A sufficient quantity of the HEC was added to obtain the desired HEC content in the resultant composite. The resulting mixture was poured into drying pans and dried at ambient temperature to obtain the SBR/HEC/clay nanocomposite.

### Example 2

In this example, preparation of rubber compositions containing nanocomposite as prepared in Example 1 is illustrated. Rubber composites were prepared following the recipes as shown in Table 1, with all amount in phr.

**Table 1**

| ***Non-Productive mixing*** | |
|---|---|
| SBR | 100 |
| Clay | variable¹ |
| HEC | variable¹ |
| Zinc oxide | 3 |
| Stearic acid | 2 |

| ***Productive mixing*** | |
|---|---|
| Sulfur | 1.4 |
| N-cyclohexyl-2-benzothiazole sulfenamide | 1.4 |
| Diphenyl guanidine | 1.7 |

| | |
|---|---|
| ¹ as per Example 3, Tables 2 and 3 | |

### Example 3

In this example, clay nanocomposites having various contents of clay and HEC in SBR are compared. Clay nanocomposites prepared as described in Example 1 and compounded as described in Example 2 were tested for various physical properties. Results of the physical properties are given in Tables 2 and 3.

The samples were tested for cure properties using an MDR 2000 following ASTM D2084 and D5289. The samples were tested for viscoelastic properties using RPA following ASTM D5289

In Tables 2 and 3 and tables in subsequent examples, the term "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993.

In Tables 2 and 3 and tables in subsequent examples, the term "UTS" refers to "Ultimate Tensile System" using an Instron Universal Test Instrument Model 4201 and a cross-head speed of 20 inches/minute (50.8 centimeters/minute).

The tan delta values determined at various percent strains are a ratio of dynamic loss modulus to dynamic storage modulus and are normally considered to be a measure of hysteresis wherein a lower hysteresis is typically desirable as being indicative of better tire rolling resistance for a tire having a tread of the rubber composition (less resistance to rolling) and therefore associated with better vehicular fuel economy. A decrease in the tan delta value is typically a corresponding indication of a desirable decrease in hysteresis of the rubber composition.

**Table 2**

| Physical Properties of SBR/Clay nanocomposites | | | | | |
|---|---|---|---|---|---|
| Sample No. | 1 | 2 | 3 | 4 | 5 |
| Clay, phr | 0 | 5 | 10 | 15 | 20 |
| HEC, phr | 0 | 0 | 0 | 0 | 0 |

| ***MDR 150ºC (Cure 150ºC, 60 min)*** | | | | | |
|---|---|---|---|---|---|
| Min Torque (dN*m) | 1.4 | 1.4 | 1.5 | 1.5 | 1.5 |
| Max Torque (dN*m) | 8.2 | 8.2 | 8.3 | 8.7 | 8.8 |
| Time to 25% Cure (min) | 1.8 | 2.6 | 2.8 | 3.1 | 3.3 |
| Time to 90% Cure (min) | 15.7 | 14.4 | 13.4 | 12.5 | 12.1 |

| ***Cured Strain Sweep at 70ºC and 10 Hz, 10% prestrain*** | | | | | |
|---|---|---|---|---|---|
| E' at 2% (MPa) | 2.7 | .35 | 4.3 | 4.7 | 5.7 |
| E" at 2% (MPa) | 0.2 | 0.2 | 0.3 | 0.4 | 0.5 |
| Tan Delta at 2% | 0.064 | 0.067 | 0.069 | 0.083 | 0.094 |

| ***Tensile Properties at 20ºC (UTS, cured 170ºC for 10 minutes)*** | | | | | |
|---|---|---|---|---|---|
| 100% Modulus (MPa) | 1.2 | 1.5 | 1.9 | 2.0 | 2.3 |
| 150% Modulus (MPa) | 1.8 | 2.2 | 2.8 | 2.8 | 3.3 |
| 200% Modulus (MPa) | 2.6 | 2.9 | 3.9 | 3.8 | 4.4 |
| 300% Modulus (MPa) | 4.8 | 4.8 | 6.3 | 6.0 | 6.8 |
| Tensile Strength (MPa) | 5.4 | 8.7 | 12.1 | 13.6 | 16.6 |
| Elongation at Break (%) | 323 | 450 | 484 | 515 | 565 |

| ***Tensile Properties at 100ºC (UTS, cured 170ºC for 10 minutes)*** | | | | | |
|---|---|---|---|---|---|
| 100% Modulus (MPa) | 1.2 | 1.8 | 1.8 | 2 | 2.2 |
| 150% Modulus (MPa) | - | 2.7 | 2.6 | 2.8 | 2.9 |
| 200% Modulus (MPa) | - | - | - | 3.6 | 3.6 |
| 300% Modulus (MPa) | - | - | - | - | - |
| Tensile Strength (MPa) | 1.5 | 3.4 | 3.3 | 4.0 | 4.4 |
| Elongation at Break (%) | 126 | 182 | 193 | 222 | 248 |

**Table 3**

| Physical Properties of SBR/HEC/Clay nanocomposites | | | | | |
|---|---|---|---|---|---|
| Sample No. | 3 | 6 | 7 | 8 | 9 |
| Clay, phr | 10 | 10 | 10 | 15 | 15 |
| HEC, phr | 0 | 2 | 3 | 3 | 4 |

| ***MDR 150ºC (Cure 150ºC, 60 min)*** | | | | | |
|---|---|---|---|---|---|
| Min Torque (dN*m) | 1.5 | 1.6 | 1.7 | 2.0 | 1.9 |
| Max Torque (dN*m) | 8.3 | 8.6 | 8.7 | 9.7 | 9.4 |
| Time to 25% Cure (min) | 2.8 | 3.0 | 2.7 | 2.6 | 2.4 |
| Time to 90% Cure (min) | 13.4 | 13.1 | 14.7 | 14.6 | 14.2 |

| ***Cured Strain Sweep at 70ºC and 10 Hz, 10% prestrain*** | | | | | |
|---|---|---|---|---|---|
| E' at 2% (MPa) | 4.3 | 4.5 | 4.9 | 6.7 | 7.1 |
| E" at 2% (MPa) | 0.3 | 0.3 | 0.4 | 0.7 | 0.7 |
| Tan Delta at 2% | 0.069 | 0.076 | 0.076 | 0.101 | 0.100 |

| ***Tensile Properties at 20ºC (UTS, cured 170ºC for 10 minutes)*** | | | | | |
|---|---|---|---|---|---|
| 100% Modulus (MPa) | 1.9 | 2.0 | 1.9 | 2.7 | 3.2 |
| 150% Modulus (MPa) | 2.8 | 2.9 | 2.7 | 3.9 | 4.6 |
| 200% Modulus (MPa) | 3.9 | 3.8 | 3.6 | 5.1 | 6.0 |
| 300% Modulus (MPa) | 6.3 | 5.9 | 5.8 | 7.5 | 8.7 |
| Tensile Strength (MPa) | 12.1 | 13.7 | 12.7 | 15.8 | 14.4 |
| Elongation at Break (%) | 484 | 582 | 518 | 547 | 473 |

| ***Tensile Properties at 100ºC (UTS, cured 170ºC for 10 minutes)*** | | | | | |
|---|---|---|---|---|---|
| 100% Modulus (MPa) | 1.8 | 1.7 | 1.9 | 2.3 | 1.9 |
| 150% Modulus (MPa) | 2.6 | 2.3 | 2.7 | 3.2 | 2.5 |
| 200% Modulus (MPa) | - | 2.9 | 3.6 | 4.2 | 3.1 |
| 300% Modulus (MPa) | - | - | - | - | - |
| Tensile Strength (MPa) | 3.3 | 3.2 | 3.8 | 5.0 | 3.5 |
| Elongation at Break (%) | 193 | 219 | 215 | 241 | 220 |

### Example 4

In this example, clay nanocomposites having various contents of clay and hydroxyethylcellulose (HEC) in natural rubber are compared. Clay nanocomposites prepared as described in Example 1 and compounded as described in Example 2 were tested for various physical properties, with a natural rubber latex used in place of the SBR latex. Results of the physical properties are given in Table 5.

| ***Non-Productive mixing*** | |
|---|---|
| Natural Rubber | 100 |
| Clay | variable¹ |
| HEC | variable¹ |
| Zinc oxide | 3 |

| ***Productive mixing*** | |
|---|---|
| Sulfur | 2 |
| TBBS | 2 |
| 1,6-bis(N,N'-dibenzylthiocarbamoyldithio)hexane | 0.6 |

| | |
|---|---|
| ¹ as per Table 5 | |

**Table 5**

| Physical Properties of Natural Rubber/HEC/Clay nanocomposites | | | | | |
|---|---|---|---|---|---|
| Sample No. | 10 | 11 | 12 | 13 | 14 |
| Clay, phr | 10 | 5 | 10 | 15 | 20 |
| HEC, phr | 0 | 1 | 2 | 3 | 4 |

| ***MDR 150ºC (Cure 150ºC, 60 min)*** | | | | | |
|---|---|---|---|---|---|
| Min Torque (dN*m) | 1.0 | 1.4 | 1.5 | 1.9 | 2.4 |
| Max Torque (dN*m) | 12.3 | 11.9 | 13.5 | 14.3 | 15.9 |
| Time to 25% Cure (min) | 5.6 | 6.2 | 3.7 | 2.9 | 2.1 |
| Time to 90% Cure (min) | 7.7 | 9.0 | 5.7 | 4.5 | 3.4 |

| ***Cured Strain Sweep at 70ºC and 10 Hz, 10% prestrain*** | | | | | |
|---|---|---|---|---|---|
| E' at 2% (MPa) | 3.1 | 2.4 | 3.6 | 4.1 | 5.3 |
| E" at 2% (MPa) | 0.1 | 0.0 | 0.1 | 0.1 | 0.2 |
| Tan Delta at 2% | 0.019 | 0.008 | 0.015 | 0.021 | 0.039 |

| ***Tensile Properties at 20ºC (UTS, cured 170ºC for 10 minutes)*** | | | | | |
|---|---|---|---|---|---|
| 100% Modulus (MPa) | 1.9 | 1.3 | 1.9 | 2.1 | 2.9 |
| 150% Modulus (MPa) | 2.8 | 1.9 | 2.8 | 3.1 | 4.2 |
| 200% Modulus (MPa) | 3.8 | 2.5 | 3.8 | 4.1 | 5.6 |
| 300% Modulus (MPa) | 6.1 | 4.0 | 5.9 | 6.6 | 8.7 |
| Tensile Strength (MPa) | 16.0 | 15.0 | 17.5 | 19.4 | 15.1 |
| Elongation at Break (%) | 530 | 588 | 562 | 569 | 451 |

Comparing the physical data between Sample 3 and Sample 6 shows the following behavior. The addition of 2 parts hydroxyethylcellulose (HEC) leads to:
a decrease of tan delta
an increase of viscoelastic modulus
an increase of elongation at break
an increase in tensile strength.

Comparing the stress-strain values of the two compounds, the elongation range from 50% to 300% shows comparable stress-values, but a higher elongation at break and higher tensile strength. Therefore one of the main effects of adding HEC can be seen as an additional reinforcement at higher loadings. Further modification of the balance of the different physical properties can be achieved by changing the clay and HEC content. For example, the data of the Sample 7 show the same effect as in Sample 6 but with a slight increase in tan delta.

### Example 5

X-ray analysis of the Na-montmorillonite (EXM 757, Süd-Chemie) revealed a layer spacing of the platelets of 1.07 nm. Analysis of a nanocomposite prepared according to the methods of Example 1 and by using a drying procedure with a temperature not higher than 70°C, with 10 phr clay (Sample 3) shows a shifting of the X-ray peak to lower scattering angles. Without wishing to be bound by any particular theory, this suggests a certain amount of rubber molecules are intercalated into the clay platetelets. The analysis suggests an increase of the layer spacing in the order of 25-30%. X-ray analysis suggests also that the intercalated clay-pockets are oriented in the dried nanocomposite.

X-ray analysis of Sample 13 shows a new additional peak at lower scattering angles. This peak suggests the interaction of hydroxyethylcellulose with the clays. This result leads to the conclusion that hydroxyethylcellulose is also intercalated in the clay platetelet structure along with the rubber. Analysis of the X-ray results suggests that the hydroxethylcellulose is distributed in the rubber-clay nanocomposite also on the nanoscale. From a thermodynamic point of view the clay-intercalated-rubber-structure and the clay-hydroxethylcellulose-structure may be weakly coupled via the clay surfaces; otherwise the rubber matrix is coupled to the clay via intercalation of the long rubber molecules.

## Claims

1. A process of preparing a composite comprising an elastomer and at least partially exfoliated, intercalated water-swellable clay, the process comprising the steps of:
(A) forming a first blend of water-swelled clay and an anionic polymer particle emulsion by blending:
(1) an aqueous mixture comprising water and a multilayered water-swellable clay, exclusive or substantially exclusive of an intercalant for said clay, wherein said water-swellable clay comprises a plurality of stacked platelets with water-expanded galleries between said platelets, wherein said galleries contain naturally occurring cationic ion exchangeable ions therein; and
(2) an elastomer latex comprising an elastomer selected from the group consisting of natural rubber, synthetic polyisoprene, polybutadiene, and styrene-butadiene rubber;
(B) blending with said first blend an aqueous mixture comprising water and from 1 to 5 percent by weight of a polar polymer to form a second blend, wherein the polar polymer is selected from at least one member of the group consisting of hydroxyethylcellulose, carboxymethylcellulose, carboxymethylcellulose sodium salt,
starch, modified starch, gelatin, polyvinylalcohol, polyacrylic acid, polyacrylic acid salts, derivatives of polyacrylic acid, and carboxylated rubbers.

2. The process of claim 1, further comprising the step of (C) drying the second blend to obtain a composite having a moisture content of less than 3 percent by weight.

3. The process of claim 1 or 2, wherein the clay is a sodium-monmorillonite.

4. The process of claim 1 or 2, wherein the polar polymer is hydroxyethylcellulose.

5. The process of at least one of the previous claims, wherein the amount of clay ranges from 1 to 100 parts by weight, per 100 parts by weight of elastomer solids in the latex.

6. A tire comprising a composite produced by the method of at least one of the previous claims.

## Patentansprüche

1. Verfahren zur Herstellung eines Verbundwerkstoffs, umfassend ein Elastomer und mindestens teilweise geblähten, interkalierten wasserquellbaren Ton, wobei das Verfahren die Schritte umfasst des:
(A) Bildens eines ersten Gemischs von wassergequollenem Ton und einer anionischen Polymerpartikelemulsion durch Mischen:
(1) einer wässrigen Mischung, umfassend Wasser und einen mehrlagigen wasserquellbaren Ton, unter Ausschluss oder im Wesentlichen unter Ausschluss eines Interkalanten für besagten Ton, wobei dieser wasserquellbare Ton eine Vielzahl gestapelter Plättchen mit wasserexpandierten Galerien zwischen diesen Plättchen umfasst, wobei besagte Galerien natürlich vorkommende kationische ionenaustauschbare Ionen darin enthalten; und
(2) eines Elastomerlatex, umfassend ein Elastomer, ausgewählt aus der aus Naturkautschuk, synthetischem Polyisopren, Polybutadien und Styrol-Butadien-Kautschuk bestehenden Gruppe;
(B) mit besagtem ersten Gemisch Mischens einer wässrigen Mischung, umfassend Wasser und 1 bis 5 Gewichtsprozent eines polaren Polymers, um ein zweites Gemisch zu bilden, wobei das polare Polymer aus mindestens einem Mitglied der Gruppe, bestehend aus Hydroxyethylcellulose, Carboxymethylcellulose, Carboxymethylcellulose-Natriumsalz, Stärke, modifizierter Stärke, Gelatine, Polyvinylalkohol, Polyacrylsäure, Polyacrylsäuresalzen, Derivaten von Polyacrylsäure, und carboxylierten Kautschuken, ausgewählt ist.

2. Verfahren nach Anspruch 1, weiter den Schritt umfassend des (C) Trocknens des zweiten Gemischs, um einen Verbundwerkstoff zu erhalten, der einen Feuchtigkeitsgehalt von weniger als 3 Gewichtsprozent aufweist.

3. Verfahren nach Anspruch 1 oder 2, wobei der Ton ein Natrium-Montmorillonit ist.

4. Verfahren nach Anspruch 1 oder 2, wobei das polare Polymer Hydroxyethylcellulose ist.

5. Verfahren nach mindestens einem der vorgenannten Ansprüche, wobei die Menge an Ton sich auf 1 bis 100 Gewichtsteile je 100 Gewichtsteile Elastomerfeststoffe in dem Latex beläuft.

6. Reifen, umfassend einen Verbundwerkstoff, der durch das Verfahren nach mindestens einem der vorgenannten Ansprüche produziert ist.

## Revendications

1. Procédé de préparation d'un composite comprenant un élastomère et au moins une argile intercalaire apte à gonfler dans l'eau, partiellement exfoliée, le procédé comprenant les étapes consistant à :
(A) former un premier mélange d'une argile gonflée dans l'eau et une émulsion particulaire à base d'un polymère anionique, en mélangeant :
(1) un mélange aqueux comprenant de l'eau et une argile multicouche apte à gonfler dans l'eau, à l'exclusion ou essentiellement à l'exclusion d'un agent d'intercalation pour ladite argile, ladite argile apte à gonfler dans l'eau comprenant plusieurs plaquettes empilées, des galeries gonflées d'eau étant disposées entre lesdites plaquettes, lesdites galeries renfermant des ions aptes à s'échanger avec des ions cationiques existant naturellement ; et
(2) un latex élastomère comprenant un élastomère est choisi parmi le groupe constitué par du caoutchouc naturel, du polyisoprène synthétique, du polybutadiène et d'un caoutchouc de styrène-butadiène ;
(B) mélanger avec ledit premier mélange un mélange aqueux comprenant de l'eau et un polymère polaire à concurrence de 1 à 5 % en poids pour obtenir un deuxième mélange, le polymère polaire représentant au moins un membre choisi parmi le groupe constitué par l'hydroxyéthylcellulose, la carboxyméthylcellulose, le sel de sodium de carboxyméthylcellulose, l'amidon, de l'amidon modifié, la gélatine, l'alcool polyvinylique, l'acide polyacrylique, des sels d'acide polyacrylique, des dérivés d'acide polyacrylique et des caoutchoucs carboxylés.

2. Procédé selon la revendication 1, comprenant en outre l'étape (C) consistant à sécher le deuxième mélange pour obtenir un composite dont la teneur en humidité est inférieure à 3 % en poids.

3. Procédé selon la revendication 1 ou 2, dans lequel l'argile est de la montmorillonite de sodium.

4. Procédé selon la revendication 1 ou 2, dans lequel le polymère polaire est l'hydroxyéthylcellulose.

5. Procédé selon au moins une des revendications précédentes, dans lequel la quantité de l'argile se situe dans la plage de 1 à 100 parties en poids, par 100 parties en poids de produits solides élastomères dans le latex.

6. Bandage pneumatique comprenant un composite que l'on obtient via le procédé selon au moins une des revendications précédentes.
